(19) Europäisches Patentamt
European Patent Office
Office européen des brevets

(11) Veröffentlichungsnummer: **0 480 190 B1**

(12) **EUROPÄISCHE PATENTSCHRIFT**

(45) Veröffentlichungstag der Patentschrift: **07.06.95**

(51) Int. Cl.6: **C08F 10/06**, C08F 2/34, C08F 2/38

(21) Anmeldenummer: **91115408.6**

(22) Anmeldetag: **12.09.91**

(54) **Polymerwachse des Propylens mit hoher Härte und Kristallinität.**

(30) Priorität: **26.09.90 DE 4030379**

(43) Veröffentlichungstag der Anmeldung: **15.04.92 Patentblatt 92/16**

(45) Bekanntmachung des Hinweises auf die Patenterteilung: **07.06.95 Patentblatt 95/23**

(84) Benannte Vertragsstaaten: **AT BE DE ES FR GB IT NL**

(56) Entgegenhaltungen:
**EP-A- 0 114 391**
**EP-A- 0 321 852**
**DE-A- 3 148 229**
**EP-A- 0 291 958**
**EP-A- 0 450 456**
**FR-A- 2 428 651**

(73) Patentinhaber: **BASF Aktiengesellschaft**
**Carl-Bosch-Strasse 38**
**D-67063 Ludwigshafen (DE)**

(72) Erfinder: **Schlund, Rueger, Dr.**
**B 5,12**
**W-6800 Mannheim 1 (DE)**
Erfinder: **Hungenberg, Klaus-Dieter, Dr.**
**Ortsstrasse 135**
**W-6943 Birkenau (DE)**
Erfinder: **Mueller, Michael Wolfgang, Dr.**
**Neurott 56**
**W-6831 Plankstadt (DE)**
Erfinder: **Kerth, Juergen, Dr.**
**Wattenheimer Strasse 15**
**W-6719 Carlsberg (DE)**
Erfinder: **Zolk, Ralf, Dr.**
**Weinbietstrasse 7**
**W-6714 Weisenheim (DE)**

**EP 0 480 190 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Polymerwachse des Propylens mit 0 bis 40 Gew.-% anderer $C_2$-$C_8$-Alk-1-ene, einer Härte, nach Höppler, von 500 bis 3000, einer Kristallinität, bestimmt durch den in Xylol unlöslichen Anteil, von 75 bis 98 Gew.-%, einer Isotaktizität von mehr als 70 Gew.-% und einem Gewichtsmittel der Molmassen $\overline{Mw}$ von 5000 bis 100000. Weiterhin betrifft die Erfindung ein Verfahren zur Herstellung dieser Polymerwachse.

Es ist bekannt, Polyolefinwachse mittels löslicher Katalysatorsysteme herzustellen (EP-A 321 852, EP-A 321 853). Derartige Katalysatorsysteme bestehen aus einer Metallocenverbindung mit organischen Liganden und einem Zentralatom eines Metalles aus der IV. und V. Nebengruppe des Periodensystems, sowie einer Alumoxanverbindung als Cokatalysator. Mit derartigen Katalysatorsystemen sind Polymerwachse mit einer engen Molmassenverteilung erhältlich. Allerdings sind Polymerisationsverfahren mit löslichen Katalysatorsystemen für viele Anwendungsbereiche aufgrund der sehr empfindlichen und nur schwer herstellbaren Metallocenverbindungen unwirtschaftlich und technisch aufwendig.

Die Herstellung von Polyolefinwachsen mit Hilfe unlöslicher Ziegler-Natta-Katalysatoren aus einer titanhaltigen Feststoffkomponente und einer Aluminiumkomponente ist in den Offenlegungsschriften EP-A 173 220 und DE-A 3 148 229 beschrieben. Die dabei verwendeten Verfahren sind jedoch ebenfalls technisch sehr aufwendig, da dort in Lösung (DE-A 3 148 229) bzw. unter Hochdruck (EP-A 173 220) polymerisiert werden muß. Die Herstellung von Polyolefinwachsen durch die technisch weniger aufwendige Gasphasenpolymerisation wird in diesen Offenlegungsschriften nicht beschrieben. Weiterhin ist es aus der FR-A 22 35 954 bekannt, Polyolefinwachse mit Hilfe eines Ziegler-Natta-Katalysatorsystems durch Lösungspolymerisation bei Temperaturen unterhalb von 95 °C herzustellen. Die dabei erhältlichen Polyolefinwachse weisen jedoch nur eine sehr geringe Isotaktizität und eine niedrige Kristallinität auf, was ihre Anwendungsmöglichkeiten begrenzt.

Polymerisate des Propylens mit einer Molmasse $\overline{Mw}$ von mindestens 109 000 können nach einem in der EP-A 291 958 beschriebenen Verfahren dadurch hergestellt werden, daß man in einen Wirbelbettreaktor in Anwesenheit von maximal 2 Vol-% Wasserstoff polymerisiert. Die daraus erhaltenen Polymerisate des Propylens zeichnen sich u.a. durch eine enge Molmassenverteilung aus.

Der vorliegenden Erfindung lag daher die Aufgabe zugrunde, den geschilderten Nachteilen abzuhelfen und Polymerwachse des Propylens mit verbesserten Eigenschaften nach einem technisch wenig aufwendigen Verfahren zu entwickeln.

Demgemäß wurden die eingangs definierten neuen Polymerwachse des Propylens gefunden.

Diese enthalten 0 bis 40 Gew.-%, bevorzugt 0 bis 20 Gew.-% anderer $C_2$-$C_8$-Alk-1-ene, beispielsweise Ethylen, But-1-en, Pent-1-en oder Hex-1-en. Besonders gute Eigenschaften weisen in diesem Zusammenhang Propylenhomopolymerisate auf. Ihre Härte, bestimmt nach Höppler, Deutsche Gesellschaft für Fettwissenschaften, beträgt 500 bis 3000, insbesondere 1000 bis 2500. Weiterhin weisen sie eine Kristallinität, bestimmt durch den in Xylol unlöslichen Anteil von 75 bis 98 Gew.-%, insbesondere von 80 bis 98 Gew.-% und eine Isotaktizität von mehr als 70 Gew.-%, insbesondere von mehr als 80 Gew.-% auf. Die Bestimmung der Isotaktizität erfolgt dabei durch $^{13}C$-Kernresonanzspektroskopie. Das Gewichtsmittel der Molmassen $\overline{Mw}$ der erfindungsgemäßen Polymerwachse, ermittelt durch Gelpermeationschromatographie, beträgt 5000 bis 100000, vorzugsweise 5000 bis 70000.

Das zu diesen Polymerwachsen des Propylens führende Verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 $\mu m$, insbesondere von 10 bis 300 $\mu m$, ein Porenvolmen von 0,1 bis 10 $cm^3/g$, insbesondere von 1,0 bis 5,0 $cm^3/g$ und

eine spezifische Oberfläche von 10 bis 1000 $m^2/g$, insbesondere von 100 bis 500 $m^2/g$ auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-($C_1$-$C_{10}$-alkyl)-Verbindungen verwendet werden. Daneben kann die titanhaltige Feststoffkomponente noch Halogen, bevorzugt Chlor oder Brom enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

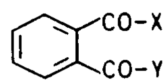

I

verwendet, wobei X und Y jeweils für Chlor oder einen $C_1$- bis $C_{10}$-Alkoxyrest oder gemeinsam für Sauerstoff stehen. Besonders bevorzugte Elektronendonorverbindungen sind Phthalsäureester, wobei X und Y $C_1$-$C_8$-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner Phenole, Naphthole sowie die $C_1$-$C_{10}$-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder $SiO_2 \cdot aAl_2O_3$ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120 °C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren überschuß, bezogen auf die magnesiumhaltige Verbindung, hinzu Nach etwa 30 bis 120 Minuten trennt man den Feststoff von der flüssiger Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliziumorganische Verbindungen. Besonders geeignete Elektronendonorverbindugen sind dabei siliciumorganische Verbindungen der allgemeinen Formel II

$R^1_nSi(OR^2)_{4-n}$ II

wobei $R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bezeichnet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, $R^2$ eine $C_1$- bis $C_4$-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbidung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Die Polymerisation wird bei dem zu den erfindungsgemäßen Polymerwachsen führenden Verfahren bei einem Druck von 10 bis 40 bar, einer Temperatur von 50 bis 150 °C und einer mittleren Verweilzeit des Reaktionsgemisches von 1 bis 5 Stunden durchgeführt. Bevorzugt sind dabei Drücke von 15 bis 35 bar, Temperaturen von 60 bis 120 °C und insbesondere vor 90 bis 120 °C und mittlere Verweilzeiten von 1,5 bis 4 Stunden.

Die Polymerisation wird in der Gasphase in einem gerührten Festbett aus feinteiligem Polymerisat durchgeführt. Der dabei als Molmassenregler vorhandene Wasserstoff wird erfindungsgemäß in solchen Mengen vorgelegt, daß sein Gehalt in der Gasphase 5 bis 60 Vol-%, insbesondere 8 bis 50 Vol-% beträgt.

Die auf diese Weise erhältlichen Polymerwachse weisen Schmelzflußindizes von 1 bis 500 g/min, vorzugsweise von 2 bis 200 g/min auf, jeweils gemessen analog DIN 53 735 bei 190 °C und 0,098 kg. Der Schmelzflußindex entspricht dabei der Menge an Polymerwachs, die innerhalb von 10 Minuten aus der nach DIN 53 735 genormten Prüfvorrichtung bei einer Temperatur von 190 °C und unter dem Gewicht des Stempels von 0,098 kg ausgepreßt wird.

Aufgrund ihrer guten Härte sowie ihrer hohen Kristallinität und Isotaktizität eignen sich die erfindungsgemäßen Polymerwachse des Propylens u. a. als Gleit- und Trennmittel, als Schmiermittel und als Bestandteil von Pasten. Für derartige Anwendungsbereiche wirkt sich ferner auch die relativ hohe Schüttdichte günstig aus.

Beispiele 1 - 5

Die Herstellung der erfindungsgemäßen Polymerwachse erfolgte in allen Beispielen in einem Rührautoklaven mit einem Nutzvolumen von 200 l. Der Reaktor enthielt ein bewegtes Festbett aus feinteiligem Polypropylen. Dabei wurde gasförmiges Propylen in den Reaktor eingeleitet und bei einer mittleren Verweilzeit von 3 Stunden polymerisiert. Die genauen Versuchsbedingungen, insbesonders der Propylenpartialdruck, die Temperatur, die Vol-% Wasserstoff und die Produktivität, d. h. die Menge hergestelltes Polymerwachs pro g Katalysator, können der nachfolgenden Tabelle entnommen werden.

In allen Beispielen erfolgte die Polymerisation kontinuierlich mit Hilfe eines Ziegler-Natta-Katalysators, wobei pro Stunde pro g der titanhaltigen Feststoffkomponente, 60 mmol Triethylaluminium und 6 mmol

Dimethoxyisobutylisopropylsilan als Katalysatorbestandteile verwendet wurden. Die Mengen der dabei verwendeten titanhaltigen Feststoffkomponente sind in Gramm der nachfolgenden Tabelle zu entnehmen.

Die dabei verwendete, titanhaltige Feststoffkomponente wurde nach folgendem Verfahren hergestellt.

Dazu versetzte man in einer ersten Stufe $SiO_2$, welches einen Teilchendurchmesser von 20 bis 45 $\mu$m, ein Porenvolumen von 1,75 $cm^3$/g und eine Oberfläche von 320 $m^2$/g aufwies, mit in n-Heptan gelöstem Butyl-octylmagnesium, wobei pro Mol $SiO_2$ • 0,3 mol der Magnesiumverbindung eingesetzt wurden. Die Lösung wurde 1,5 Stunden lang bei 90 °C gerührt, danach auf 20 °C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 mol Ethanol, bezogen auf 1 mol Magnesium, hinzugefügt. Dieses Gemisch wurde 1,5 Stunden bei 80 °C gerührt und danach mit 6 mol Titantetrachlorid und 0,5 mol Phthalsäuredi-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125 °C mit einer 15 gewichtsprozentigen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

Die Eigenschaften der mit Hilfe dieses Verfahrens hergestellten Polymerwachse, insbesondere die Härte, die Kristallinität, die Isotaktizität, das Gewichtsmittel der Molmassen $\overline{Mw}$, der Schmelzflußindex, ferner der Schmelzpunkt, die Viskosität und die Schüttdichte können der nachstehenden Tabelle entnommen werden.

| | 1 | 2 | 3 | 4 | 5 |
|---|---|---|---|---|---|
| **Versuchsbedingungen** | | | | | |
| Partialdruck Propylen [bar] | 19,2 | 17,4 | 16,8 | 15,1 | 11,1 |
| Temperatur [°C] | 100 | 100 | 100 | 100 | 100 |
| Wasserstoffanteil [Vol-%] | 8,7 | 17,0 | 20,9 | 28,3 | 43,0 |
| Produktivität [g Polymerwachs/g Katalysator] | 7235 | 4470 | 3420 | 2510 | 2050 |
| Menge der verwendeten titanhaltigen Feststoffkomponente [g] | 2,76 | 4,47 | 5,85 | 7,97 | 9,76 |
| **Eigenschaften des Polymerwachses** | | | | | |
| Härte a) [bar] | 2026 | 1927 | 1931 | 1653 | 1109 |
| Kristallinität b) [%] | 97,3 | 95,8 | 93,2 | 90,8 | 88,5 |
| Isotaktizität c) [%] | 95,0 | 94,0 | 89,0 | 91,0 | 88,0 |
| Gewichtsmittel d) $\overline{Mw}$ | 92000 | 67000 | 50000 | 36000 | 33000 |
| Schmelzflußindex e) [g/10 min] | 6,6 | 30,9 | 55,2 | 78,0 | 102 |
| Schmelzpunkt f) [°C] | 160,7 | 156,5 | 155,0 | 152,6 | 151,3 |
| Viskosität g) [dl/g] | 0,81 | 0,57 | 0,47 | 0,33 | 0,30 |
| Schüttdichte h) [g/l] | 388 | 401 | 424 | 434 | 418 |

a) Höppler-Härte, bestimmt nach DGF - M III 9a der Deutschen Gesellschaft für Fettwissenschaften/Münster, bei 23°C

b) bestimmt durch den Anteil xylolunlöslicher Polymerwachse

c) bestimmt durch das Pentadenverhältnis aus dem $^{13}C$-Kernresonanzspektrum

d) bestimmt durch Gelpermeationschromatographie

e) analog DIN 53 735, bei 190°C und 0,098 kg

f) bestimmt durch Differential Scanning Calorimetry

g) bestimmt mittels eines Viskosimeters nach Ubbelohde

h) nach DIN 53 466

## Patentansprüche

**1.** Verfahren zur Herstellung von Polymerwachsen des Propylens mit 0 bis 40 Gew.-% anderer $C_2$-$C_8$-Alk-1-ene, einer Härte, nach Höppler, von 500 bis 3000, einer Kristallinität, bestimmt durch den in Xylol unlöslichen Anteil, von 75 bis 98 Gew.-%, einer Isotaktizität von mehr als 70 Gew.-% und einem Gewichtsmittel der Molmasse $\overline{Mw}$ von 500 bis 100 000, wobei man die Polymerisation in Anwesenheit von Wasserstoff als Molmassenregler, mittels eines Ziegler-Natta-Katalysatorsytems, das neben einer titanhaltigen Feststoffkomponente eine Aluminiumkomponente und eine Elektronendonorkomponente enthält, bei einem Druck von 10 bis 40 bar, einer Temperatur von 50 bis 150°C und einer mittleren Verweilzeit des Reaktionsgemisches von 1 bis 5 Stunden vornimmt, dadurch gekennzeichnet, daß man aus der Gasphase heraus in einem bewegten Festbett polymerisiert und den Gehalt an Wasserstoff in der Gasphase auf 5 bis 60 Vol-% eingestellt.

**2.** Verfahren nach Anspruch 1, dadurch gekennzeichnet, daß man den Gehalt an Wasserstoff in der Gasphase auf 8 bis 50 Vol-% eingestellt.

## Claims

**1.** A process for preparing a polymeric wax of propylene with from 0 to 40 % by weight of other $C_2$-$C_8$-1-alkenes, with a Höppler hardness of from 500 to 3000, with a crystallinity, determined from the proportion insoluble in xylene, of from 75 to 98 % by weight, with an isotacticity of more than 70 % by weight and with a weight average molecular weight $\overline{Mw}$ of from 5000 to 100000, where the polymerization is carried out in the presence of hydrogen as molecular weight regulator, using a Ziegler-Natta catalyst system which, besides a titanium-containing solid component, contains an aluminum component and an electron donor component, under a pressure of from 10 to 40 bar at from 50 to 150°C with an average residence time of the reaction mixture of from 1 to 5 hours, which comprises polymerization from the gas phase in an agitated fixed bed, and adjusting the content of hydrogen in the gas phase to from 5 to 60 % by volume.

**2.** A process as claimed in claim 1, wherein the content of hydrogen in the gas phase is adjusted to from 8 to 50 % by volume.

## Revendications

1. Procédé de préparation de cires polymères du propylène contenant 0 à 40% en poids d'autres alcènes-1 en $C_2$-$C_8$, ayant une dureté Höppler de 500 à 3000, une cristallinité, déterminée par la fraction insoluble dans le xylène, de 75 à 98% en poids, une isotacticité de plus de 70% en poids et une moyenne en poids de la masse moléculaire $\overline{M}w$ de 500 à 100 000, la polymérisation étant effectuée en présence d'hydrogène servant de régulateur de la masse moléculaire, au moyen d'un système catalytique de Ziegler-Natta qui contient, en plus d'un composant solide au titane, un composé de l'aluminium et un composant donneur d'électrons, sous une pression de 10 à 40 bar, à une température de 50 à 150 °C et avec une durée moyenne de séjour du melange réactionnel de 1 à 5 h, caractérisé en ce qu'on polymérise à partir de la phase gazeuse en lit de solides mis en mouvement et on règle la teneur en hydrogène de la phase gazeuse à 5-60% en volume.

2. Procédé selon la revendication 1, caractérisé en ce qu'on règle la teneur en hydrogène de la phase gazeuse à 8-50% en volume.